# EUROPEAN PATENT APPLICATION

(11) **EP 4 318 370 A1**
(43) Date of publication of application: **07.02.2024**
(21) Application number: 22937653.8
(22) Date of filing: 19.12.2022
(51) Int. Cl.: G06Q 50/26, G06Q 30/02, G06Q 30/00, G06F 17/18

(54) **METHOD FOR MODELING CARBON EMISSION REDUCTIONS THROUGH SECOND-HAND TRADING**

(30) Priority: 23.05.2022 KR 20220062847
(71) Applicant: Joonggonara Co., Ltd., Seocho-gu Seoul 06606 (KR)
(72) Inventor: KANG, Nam Seok, Seoul 08259 (KR)
(74) Representative: Isarpatent
(86) International application number: PCT/KR2022/020701
(87) International publication number: WO 2023/229129

(57) **Abstract**

An objective of the embodiments according to the present disclosure is to calculate carbon emission reductions through second-hand trading and to incentivize the parties of the second-hand trade by enabling them to buy and sell carbon credits corresponding to the carbon emission reductions. To achieve this, the method for modeling carbon emission reductions through second-hand trading includes: obtaining information about a category and an age of a particular product, obtaining information about an average period of use of the category to which the product belongs, determining a remaining period of use based on a difference between the average period of use and an age of the product when a second-hand trading of the product is concluded, and calculating, based on the remaining period of use of the product, carbon emission reductions when a second-hand trading of the product is concluded.

## Description

### [TECHNICAL FIELD]

The present disclosure relates to an e-commerce platform for second-hand trading, and more specifically, to modeling carbon emission reductions through second-hand trading to further activate trading on the e-commerce platform.

### [BACKGROUND ART]

Currently, the world is implementing the Kyoto Protocol to phase out carbon emissions, one of the main causes of global warming, mainly in industrialized countries. Under the Kyoto Protocol, the obligated countries or companies are required to limit their carbon emissions by specific periods, and are obligated to buy and sell carbon credits for excess emissions. In other words, if a country or company emits less than its quota (carbon emissions that may be emitted over a certain time period), it can sell the surplus (carbon emission rights) to other countries or companies, and on the other hand, may purchase carbon credits from other countries.

Korea has already started the first planning period (2015 to 2017) of the Emission Trading System from January 1, 2015 under the "Basic Act on Low Carbon and Green Growth," followed by the second planning period (2018 to 2020), and is currently implementing the third planning period (2021 to 2025). The total number of carbon credits is determined according to the size of the business site and allocated to each company to evaluate carbon emissions based on a precise standard, and the business site is permitted to trade excess or deficient credits.

In addition to the growing number of carbon credits being traded, consumers are also shifting their spending behavior toward carbon neutrality. Recently, consumers have been preferring the consumption of eco-friendly products/services even if the prices of products/services are slightly higher, and companies are also making various attempts to incentivize such consumers for eco-friendly consumption in accordance with the consumers' changed consumption tendencies, in order to promote consumers' consumption activities.

### [DISCLOSURE]

### [TECHNICAL PROBLEM]

Second-hand trading allows an increase in the actual lifespan of a product by making in available to a number of people, as opposed to a single person owning a particular product. While it is clear that second-hand trading has a natural carbon emission reduction effect by increasing the lifespan of a product, there has been no consideration of how to quantify the carbon emission reduction from second-hand trading, nor has there been any consideration of the concept of linking carbon emission reduction from second-hand trading to the purchase and sale of carbon credits.

Accordingly, one object of the present disclosure is to provide a method for calculating carbon emission reductions through second-hand trading.

Another object of the present disclosure is to enable parties of second-hand trading to earn revenue by trading carbon credits corresponding to carbon emission reductions.

However, the tasks to be resolved by the present disclosure is not limited to those mentioned above, and may include objects that are not mentioned but can be clearly understood by those skilled in the art from the descriptions below.

### [MEANS OF RESOLVING THE TASK]

A method for modeling carbon emission reduction through second-hand trading according to an embodiment includes: obtaining information about a category and age of a particular product, obtaining information about an average period of use of a category to which the product belongs, determining a remaining period of use based on a difference between the average period of use and the age of the product when a second-hand trading of the product is concluded, and calculating, based on the remaining period of use of the product, carbon emission reductions when the second-hand trading of the product is concluded.

A method for modeling carbon emission reduction through second-hand trading according to an embodiment including: obtaining information about a category of a particular product, obtaining a first carbon emission of an average manufacturing process of a category to which the product belongs and a second carbon emission of an average disposal process of the category to which the product belongs, and calculating, based on the first carbon emission and the second carbon emission, carbon emission reductions when a second-hand trading of the product is concluded.

A service device for modeling carbon emission reductions through second-hand trading according to an embodiment including: a memory and a processor including instructions, wherein the instructions are executed by the processor, to implement: an acquisition module for acquiring information about a category and age of a particular product and information about an average period of use of the category to which the product belongs, a first computation module for determining the remaining period of use based on a difference between the average period of use and the age of the product, and a second computation module for calculating, based on the remaining period of use of the product, carbon emission reductions when a second-hand trading of the product is concluded.

A service device for modeling carbon emission reduction through second-hand trading according to an embodiment including: a memory and a processor including instructions, wherein the instructions, when executed by the processor, may perform the operations of: obtaining information about a category and age of a particular product, obtaining information about an average period of use of the category to which the product belongs, determining a remaining period of use based on a difference between an average period of use and an age of the product when a second-hand trading of the product is concluded, and calculating carbon emission reductions when a second-hand trading of the product is concluded.

### [EFFECT OF THE INVENTION]

According to the embodiments of the present disclosure, the amount of carbon emissions reduced during a second-hand trading may be quantitatively calculated.

In addition, according to embodiments of the present disclosure, an incentive corresponding to the carbon emissions reduced by a second-hand trading may be provided to all users of the e-commerce platform on which the second-hand trading is executed, which ultimately encourage second-hand trading as well as further activating the resale of low-carbon products.

However, the effects that may be obtained from the present disclosure are not limited to those mentioned above, and other effects that have not been mentioned would be apparent to those skilled in the art from the descriptions below.

### [BRIEF DESCRIPTION OF THE DRAWINGS]

The following drawings attached to this specification illustrate preferred embodiments of the present disclosure and serve to further illustrate the technical concept of the present disclosure in conjunction with the detailed description of the invention, and should not be construed as being limited to what is shown in the drawings.
FIG. 1 is a schematic drawing of a system for implementing an e-commerce platform according to one embodiment of the present disclosure.
FIG. 2 is a flowchart of a method for modeling carbon emission reductions through second-hand trading according to one embodiment of the present disclosure.
FIG. 3 is a flowchart of a method for modeling carbon emission reductions through second-hand trading according to another embodiment of the present disclosure.
FIG. 4 is a flowchart illustrating the process of trading environmental points and carbon credits when a second-hand trading of a product is executed through an e-commerce platform according to an embodiment of the present disclosure.
FIGS. 5 and 6 are drawings illustrating examples of user interfaces of an e-commerce platform according to one embodiment of the present disclosure.

### [DETAILED DESCRIPTION TO CARRY OUT THE INVENTION]

Referring to the attached drawings, below is a detailed description of the examples that will enable the present disclosure to be easily carried out by those skilled in the art. However, the present disclosure may be implemented in many different forms and is not limited to the examples described herein. In addition, in detailing the principles of operation of preferred embodiments of the present disclosure, specific descriptions of related known features or configurations are omitted where it is determined that such detailed descriptions would unnecessarily obscure the essence of the present disclosure.

In addition, throughout the drawings, the same drawing reference numbers are used for parts similar in function and action. Throughout the specification, when a particular part is connected to another part, it includes not only direct connections, but also indirect connections, with other elements therebetween. In addition, including a particular component does not exclude other components but rather implies that additional components are included unless otherwise specified.

Furthermore, when a portion of the specification refers to "include" a component, it refers to further including another component and not excluding another component unless otherwise specified.

Terms such as "first," "second," *etc.* may be used to explain various components, but these components are not to be limited by such terms. That is, the terms are used only for the purpose of distinguishing one component from another component. For example, without exceeding the scope of protection sought by the present disclosure, a first component may be referred to as a second component, and similarly, a second component may be referred to as a first component. The term "and/or" includes a combination of a plurality of related items or any one of a plurality of items.

In addition, although generic terms that are currently widely used were selected for use in the present disclosure by considering their function in the present disclosure, they may vary depending on the intent of those skilled in the art or precedents, the emergence of new technologies, and the like. In addition, in certain cases, terms have been arbitrarily selected by the applicant, in which case, their meaning will be described in detail. Accordingly, the terms used in the present disclosure should be defined based on the meaning of the term and the overall context of the present disclosure, and not simply on the name of the term.

Below is a detailed description of the examples in reference to the drawings.

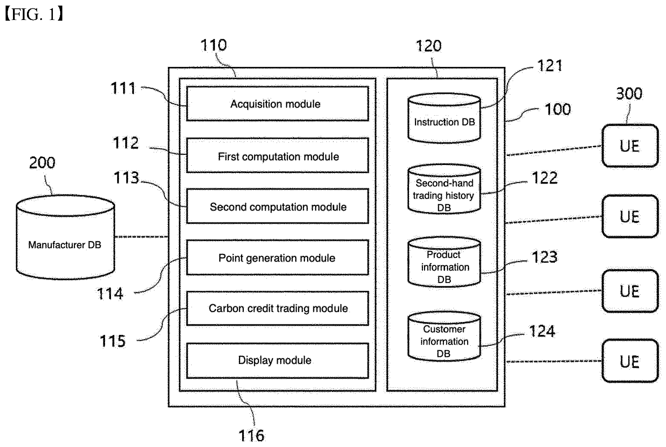

FIG. 1 is a schematic drawing of a system for implementing an e-commerce platform according to one embodiment of the present disclosure. Referring to FIG. 1, a system for implementing an e-commerce platform may include a server device (100), a manufacturer database (DB) (200) and a plurality of User Equipment (UE) (300).

As a non-limiting example, the server device (100) is for implementing an e-commerce platform for conducting second-hand trading and includes a processor (110) and a memory (120), wherein the memory (120) may include an instruction DB (121) including computer-executable instructions for implementing an e-commerce platform, a second-hand trading history DB (122) for storing historical records of second-hand trading conducted on the e-commerce platform, a product information DB (123) for storing product information including at least one of a category, age, brand, specification, and image of a product that is the subject of a second-hand trading, and a customer information DB (124) for storing the user information, purchase history, *etc.* of users (*i.e.,* sellers, buyers, prospective sellers, prospective buyers, *etc*.) using the e-commerce platform, without limiting the specific features.

The processor may be a general-purpose processor, FPGA (Field Programmable Gate Array), ASIC (Application Specific Integrated Circuit), DSP (Digital Signal Processor) and/or other.

When the instructions in the instruction DB (121) by the processor (110), the processor (110) may implement a plurality of modules including an acquisition module (111), a first computation module (112), a second computation module (113), a point generation module (114), a carbon credit trading module (115) and a display module (116). A plurality of including the carbon credit trading module (115) and the display module (116) may be implemented. However, any or all of these modules (111, 112, 113, 114, 115, 116) may be implemented as separate hardware and not as software implementations based on the execution of instructions by the processor, and the specific design is not limited herein.

The acquisition module (111) may acquire the product information of the product that is the subject of the second-hand trading and information about the average period of use of the category to which the product belongs. As an embodiment, the product information may include at least one of a category, age, brand, specification, image, and product condition. In addition, the average period of use of the category to which the product belongs may be an indicator of how long the products of the category should be discarded on average after use from the date of manufacture.

Such product information and average period of use may be obtained from at least one of the product information DB (123) and the manufacturer DB (200) of the manufacturer server. As a non-limiting example, the product information may include data stored in the product information DB (123) when the user registers a second-hand product, product data collected from the manufacturer DB (200) and data extracted from the product image stored on the product information DB (123) and the like. In addition, the average period of use of the category to which the product belongs may be data obtained from the manufacturer DB (200) but may also be calculated in the server device (110) itself. As an example, the average period of use may be calculated by a separate computation module (not shown) based on data obtained from the second-hand trading history DB and the product information DB of the server device (110), data obtained from the manufacturer DB (200) of the manufacturer server, and the like, and then obtained by the acquisition module (111), but not limited thereto.

The first computation module (112) may determine the difference between the average period of use obtained by the acquisition module (110) and the age of the product as the remaining period of use when a second-hand trading of the product is concluded. For example, if the product that is subject to the second-hand trading is a monitor of brand A, and the average period of use is 10 years and the current age is 3 years, the remaining period of use through the second-hand trading may be determined to be 7 years.

However, instead of determining the remaining period of use as the difference between the average period of use of the product category and the current age of the product, the remaining period of use may be calculated to be adjusted based on at least one of the category, average period of use, age, brand, and second-hand trading history of similar products from the second-hand trading history DB (122). This is because, due to the nature of the product category, it is necessary to take into account various factors, such as the likelihood that the product will be traded in again, the likelihood that it will be discarded prematurely, brand recognition, and the like. In this case, for example, the remaining period of use may be determined by multiplying the weight of 0.8 (in the example above, (10 years - 3 years) x 0.8 = 5.6 years) for the difference between the average period of use and the current age.

In particular, when the first computation module (112) computes the remaining period of use, it may compute the remaining period of use by assigning a weight to the branded product if a brand manufacturer's certification exists for the brand of the product, and adjusting the remaining period of use based on this weight. For example, if a product of a brand of Company A is certified as to its quality or with a warranty period, it may be expected that a user who purchases the product through a second-hand trading will use the product for a longer period of time, and therefore, the remaining period of use may be weighted to give a longer remaining period of use compared to a product of a brand of another company or even a longer remaining period of use than the difference between the average period of use and the age of the product, and the specific method of determination in this regard is not limited herein.

In addition, the first computation module (112) may determine the value of (age - average period of use) of the product as the excess period of use if the age of the product is older than the average period of use of the category of the product obtained by the acquisition module (110). For example, if the product that is subject to second-hand trading is a monitor of brand A, and the average period of use is 10 years and the current age is 12 years, the excess period of use through the second-hand trading may be determined to be 2 years. Alternatively, the first computation module (112) may determine, based on data from at least one of the second-hand trading history DB (122), the product information DB (123), the customer information DB (124), and the manufacturer DB (200), that the party that has purchased the product through a second-hand trading will use the product for a specific additional time and may adjust to calculate such value of excess period of use. For example, if a product that is subject to second-hand trading has an average age of 10 years and a current age of 12 years, the buyer of the second-hand trading may determine that the buyer will use the product for 2 + 1 = 3 years, based on the brand of the product, the buyer's trading history, and the like. In addition, the seller of the product may be given more weight in providing environmental points than if the product was sold within the average period of use, since the excess period of use contributed to the carbon emission reductions. However, the specific method of determination is not limited herein.

The second computation module (113) may compute a carbon emission reduction in the case of a product being traded in based on the remaining period of use of the product, or in some cases, based on the remaining period of use and the excess period of use, as computed through the first computation module (112) when a second-hand trading of the product is executed.

The specific method of calculating the carbon emission reduction is not limited herein. For example, the second computation module (113) may estimate that a predetermined amount of carbon emissions can be reduced per year for the category of the product, and calculate, for example, (1 year's worth of predetermined carbon emission reductions) x 3, if the remaining period of use (and additional period of use) is 3 years.

As another embodiment, the second computation module (113) may obtain the first carbon emission of the average manufacturing process and the second carbon emission of the average disposal process of the category to which the product belongs, then the computation of the carbon emission reductions when a second-hand trading of the product executed by the second computation module (113) may be based on the remaining period of use (and additional period of use), the first carbon emission, and the second carbon emission for the product. In this regard, the first carbon emission and the second carbon emission may be obtained from the manufacturer DB (200) or the product information DB (123), or may be obtained from other source, but not limited thereto. For example, assuming that a laptop has an age of 5 years, a remaining period of use of 2 years, and a combined amount of first carbon emissions and second carbon emissions generated in the manufacture and disposal of the product is 100 grams, considering the opportunity cost when second-hand trading has not been executed at this point, it is likely that the buyer would purchase a new laptop if the current laptop is disposed, thus the carbon emissions needed to manufacture and dispose of a new laptop to be purchased by the buyer would be 100 g. On the other hand, if the laptop has been discarded after use for 5 years, it can be determined that carbon emissions of 100g/5 = 20g had occurred every year, whereas the carbon emissions from the manufacture/disposal of a new laptop purchased through second-hand trading would not only be reduced but would result in an additional use of 2 years (remaining period of use), thus carbon emissions of 100g/7 = 14.3g occurs every year. This indicates that a reduction of approximately 6g occurs in the carbon emissions each year. In other words, it can be ascertained that 100g of carbon emissions needed in the manufacture and disposal of a new laptop and about 6g of carbon emissions are saved each year. Therefore, the second computation module (113) may determine that 100g + (6g x 2 years) = 112g of carbon emissions have been reduced, but the specific method of calculation is not limited herein.

In addition, as another embodiment, instead of adjusting the remaining period of use or the excess period of use in the first computation module (112), the value of reduced carbon emissions may be adjusted based on the second-hand trading history, brand, age, category, and the like when determining the carbon emission reductions in the second computation module (113), but such adjustment is not limited herein.

As another embodiment, the second computation module (113) may calculate the amount of carbon emission reductions when a second-hand trading of the product is executed based on the first carbon emission of the average manufacturing process and the second carbon emission of the average disposal process of the category to which the product belongs without considering the remaining period of use (that is, the calculation of the remaining period of use is omitted) calculated by the first computation module (112). For example, if the sum of the first carbon emission and the second carbon emission of the laptop category is 100g, the amount of carbon emission reductions in a second-hand trading may be calculated as 110g by predetermining a characteristic ratio of the sum of the first carbon emission and the second carbon emission, for instance, as 110%.

The point generation module (114) may generate environmental points (tentative name) as an example of an incentive to be paid to the buyer of a product when a second-hand trading of the product is concluded through an e-commerce platform and provide the generated environmental points to at least one of the product buyer and seller.

These environmental points may be determined based on carbon emission reductions when a second-hand trading of the product is concluded as calculated by the second computation module (113). Alternatively, these environmental points may be determined by considering not only the carbon emission reductions in a second-hand trading, but also the user information, and purchase and sale history of the second-hand trade buyer and/or seller obtained from the customer information DB (124) or other factors. For example, environmental points may also be determined based on the weighted value of the carbon emission reductions for each of 10 second-hand trading in view of the buyer's second-hand purchase history of a particular product. Alternatively, if a second-hand seller sells a second-hand product that has exceeded the average period of use and a transaction has been concluded, the excess period of use may be weighted as described above but may also be weighted in the provision of environmental points. However, there is no restriction on how these environmental points are specifically determined.

The carbon credit trading module (115) may act as an agent for buying selling carbon credits when a user of the e-commerce platform wishes to buy and sell carbon credits using their environmental points. As an embodiment, in Korea, carbon credits may be traded on the Korea Exchange (KRX) (not shown), and when a user of the e-commerce platform wishes to sell their carbon credits using environmental points, the carbon credit trading module (115) may convert the user's environmental points into cash or other in-kind assets that can be traded on the KRX, then buy or sell the carbon credits at the current market price established on the KRX. Alternatively, the carbon credit trading module (115) may facilitate the purchase and sale of carbon credits through exchanges in other countries or organizations other than the KRX, including but not limited thereto.

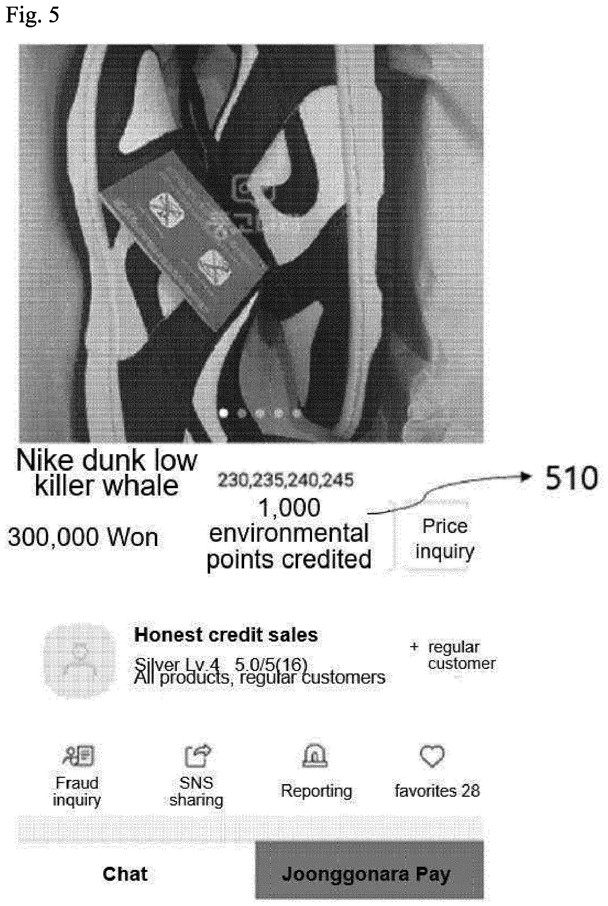

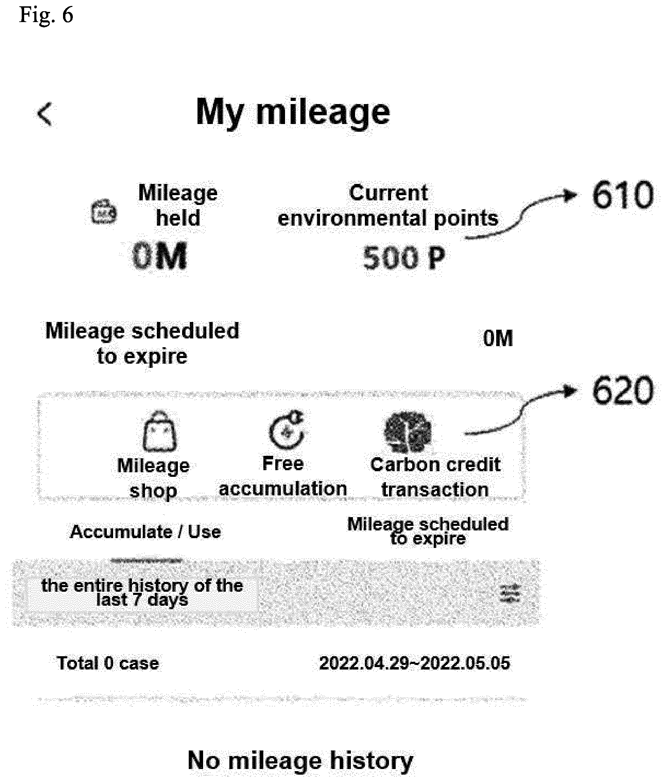

The display module (116) may cause a user interface of the e-commerce platform to be displayed on each user device (300) (for example, cell phone, PC, PDA, tablet, wearable device, or the like) and as described later in relation to FIGS. 5 and 6, such user interface may display environmental points to be paid to the buyer and/or seller of the product when a second-hand trading of the product is concluded, the user's accumulated environmental points, a button that may be selected if the user wishes to buy or sell carbon credits, and the like. As so, by displaying the environmental points upon executing a second-hand trading through the user interface and enabling the purchase of carbon credits using such environmental points, the user interface has the advantage of highlighting the positive effects of second-hand trading by emphasizing the eco-friendly aspect of second-hand trading to the users of the e-commerce platform, while promoting not only the activation of second-hand trades, but also the resale of products having low carbon emissions, thereby complying the recent eco-friendly consumption trend.

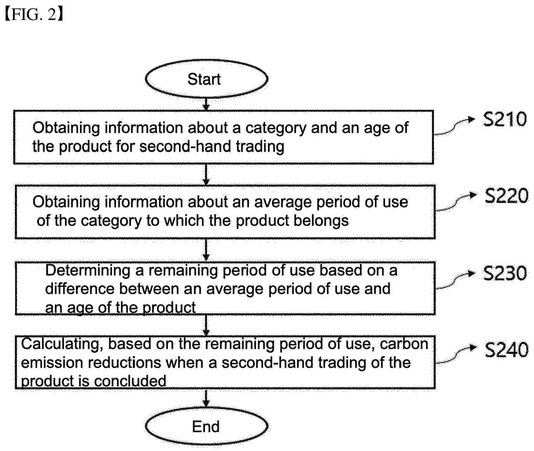

FIG. 2 is a flowchart of a method for modeling carbon emission reductions through second-hand trading according to one embodiment of the present disclosure. Such modeling method may be performed when a seller who wishes to engage in a second-hand trade registers content (*e.g.,* a post) relating to the product they wish to sell on the e-commerce system, or thereafter, and the point at which the modeling method may be performed is not limited herein. In addition, the order of each step may vary as needed and is not necessarily in the order described.

Referring to FIG. 2, first, a step (S210) of obtaining information about the category and age of the product that is the subject of a second-hand trade may be performed. In addition, in this step, not only the category and age of the product, but also the product information, for example, at least one of the brand, specification, image, and product condition, may also be obtained. Such information may be obtained by the acquisition module (111) from at least one of the product information DB (123) in the server device (100) and the manufacturer DB (200) of the manufacturer server.

In step (S220), information about the average age of the category to which the product that is subject to second-hand trading belongs may be obtained. The average period of use of the category to which the product belongs may be an indicator of how long the products of the category should be discarded on average after use from the date of manufacture. The average period of use of the category to which the product belongs may be obtained from at least one of the product information DB (123) and the manufacturer DB (200) of the manufacturer server. The average period of use of the category to which the product belongs may be data obtained from the manufacturer DB (200), but also may be calculated in the server device (110) itself. As an embodiment, the average period of use may be calculated by a separate module (not shown) based on data obtained from the second-hand trading history DB and the product information DB of the server device (110), data obtained from the manufacturer DB (200) of the manufacturer server, and the like, then obtained by the acquisition module (111), which is not limited herein.

In step (S230), if a second-hand trading of the product that is subject to the second-hand trading is concluded, the remaining period of use may be determined based on the difference between the average period of use obtained in step (S220) and the current age of the product. As described above, for example, if the product that is subject to the second-hand trading is a monitor of a brand of Company A, and the average period of use is 10 years and its current age is 3 years, the remaining period of use through the second-hand trading may be determined to be 7 years assuming that the product was not traded and discarded. However, in step (S230), instead of determining the difference between the average period of use of the product category and the current age of the product directly as the remaining period of use, the remaining period of use may be calculated to be adjusted based on at least one of the category, average period of use, age, and brand of the product, and the second-hand trading history of similar products from the second-hand trading history DB (122). This is because, due to the nature of the product category, it is necessary to take into account various factors, such as the likelihood that the product will be traded in again, the likelihood that it will be discarded prematurely, brand recognition, and the like. In addition, the remaining period of use may be calculated by assigning a weight to the branded product if a brand manufacturer's certification exists for the brand of the product, and adjusting the remaining period of use based on this weight. However, the specific method of determination in this regard is not limited herein.

In addition, in step (S230), if a second-hand trading of the product is concluded, and the age of the product is older than the average period of use of the category of the product, the value of the product (age - average period of use) may be determined as the excess period of use. Alternatively, the first computation module (112) may determine, based on data from at least one of the second-hand trading history DB (122), the product information DB (123), the customer information DB (124), and the manufacturer DB (200), that the person that purchased the product through second-hand trading will use the product for a certain period of time, and may adjust the value of the excess period of use. However, the specific method of determination in this regard is not limited herein.

In step (S240), the carbon emission reductions may be calculated when second-hand trading of the product is concluded, based on the remaining period of use calculated in step (S230). For example, assuming that a predetermined amount of carbon emissions can be reduced every year for the category of the product, and the remaining period of use is 3 years, a calculation can be made as (1 year of predetermined carbon emission reductions) x 3. In addition, as another example, in step (S240), the calculation of the carbon emission reductions when a second-hand trading of the product is concluded after obtaining the first carbon emission of an average manufacturing process and the second carbon emission of an average disposal process in the category to which the product belongs, may be based on the remaining period of use (and excess period of use), the first carbon emission and the second carbon emission of the product. The specific method of calculation in this regard is not limited herein.

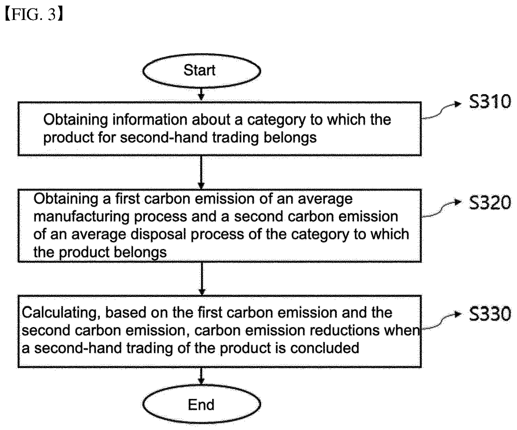

FIG. 3 is a flowchart of a method for modeling carbon emission reductions through second-hand trading according to another embodiment of the present disclosure. Any descriptions of parts that overlap with the descriptions in the examples of FIG. 2 are omitted in the descriptions of the examples hereinafter.

Referring to FIG. 3, first, a step (S310) of obtaining information about the category of the product that is subject to second-hand trading may be performed. In addition, in the same step, not only the category of the product, but also at least one of the product information, for example, the age, brand, average period of use, specifications, image, and product condition, may be obtained.

In step (S320), the first carbon emission of the average manufacturing process and the second carbon emission of the average disposal process of the category to which the product belongs may be obtained. The first carbon emission and the second carbon emission may be obtained from the manufacturer DB (200) or the product information DB (123), or obtained from other sources, which is not limited herein.

In step (S330), the carbon emission reduction may be calculated when second-hand trading of the product is concluded based on the first carbon emission and the second carbon emission. That is, the embodiment described in reference to FIG. 2 differs only in that the amount of carbon emission reduction is calculated when second-hand trading of the product is concluded based on the first carbon emission of the average manufacturing process and the second carbon emission of the average disposal process of the category to which the product belongs, and does not consider the remaining period of use or the excess period of use. For example, if the sum of the first carbon emission and the second carbon emission of the laptop category is 100g, the carbon emission that is reduced when a second-hand trading occurs may calculated as 100g x 1.1 = 110g by predetermining a characteristic ratio of the sum of the first carbon emission and the second carbon emission, for instance, as 110%. However, this specific method of calculating the carbon emission reduction is not limited herein.

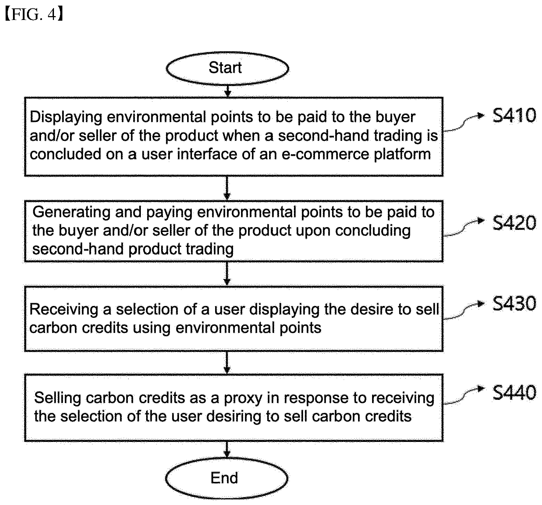

FIG. 4 is a flowchart illustrating the process of trading environmental points and carbon credits when a second-hand trading of a product is executed through an e-commerce platform according to an embodiment of the present disclosure. FIGS. 5 and 6 are drawings illustrating examples of user interfaces of an e-commerce platform according to one embodiment of the present disclosure.

Referring to FIG. 4, first, in step (S410), the display module (116) may display a user interface of an e-commerce platform, wherein the user interface may display environmental points that will be awarded to at least one of a buyer and a seller of a product if a second-hand trading of the product is concluded. As an embodiment, referring to FIG. 5, it can be ascertained that drawing reference number 510 indicates the environmental points that can be obtained by the seller next to the sale price of a second-hand product, and the specific method of displaying the environmental points is not limited herein. As described above, the environmental points may correspond to or determined based on the carbon emission reductions at the time of a second-hand trade, or determined by considering not only the carbon emission reductions, but also various factors, such as the user information purchase history, and the like of the second-hand trading buyer, which is not limited herein.

In step (S420), the point generation module (114) may generate environmental points when second-hand trading of the product is concluded through an e-commerce platform to be provided to the product buyer and/or seller.

In step (S430), a selection may be received from the user device (UE) indicating that the user of the e-commerce platform wishes to buy or sell carbon credits using their environmental points. As a non-limiting example, referring to the user interface of the e-commerce platform depicted in FIG. 6, the user interface may include a "held environmental points" button (610) and a "trade carbon credit" button (620) for the points and credit currently held by the user, and the user may select the "trade carbon credits" button (620) (*e*.*g*.: a click by a mouse cursor or a touch input on the touch screen) if the user wishes to sell carbon credits using their environmental points.

In step (S440), the carbon credit trading module (115) may, in response to receiving the selection indicating that the user of the e-commerce platform wishes to buy or sell carbon credits using their environmental points, facilitate the purchase or sale of carbon credits. As an example, the carbon credit trading module (115) may convert the user's environmental points into cash or other in-kind assets that can be traded on the KRX, then buy or sell the carbon credits at the current market price established on the KRX.

As so, by displaying and paying the environmental points upon executing a second-hand trading through the user interface and enabling the purchase of carbon credits using such environmental points, the user interface has the advantage of highlighting the positive effects of second-hand trading by emphasizing the eco-friendly aspect of second-hand trading to the users of the e-commerce platform, while promoting not only the activation of second-hand trades, but also the resale of products having low carbon emissions, thereby complying the recent eco-friendly consumption trend.

It is clear that each step or operation according to FIGS. 2 to 4 may be performed by a computer including one or more processors based on an execution of a computer program stored in a computer-readable recording medium.

Each instruction stored in the aforementioned recording medium may be implemented by a computer program programmed to perform each corresponding step, and the computer program may be stored in a computer-readable recording medium and executed by a processor. The computer-readable may be a non-transitory readable medium. In this context, a non-transitory readable medium refers to a medium that stores data on a semi-permanent basis, such as a register, cache, memory, or the like, rather than a medium that stores data for a short period of time, and is readable by a device. Specifically, the programs for performing the various methods described above may be provided by being stored in non-transitory readable media, such as CDs, DVDs, hard disks, Blu-ray discs, USBs, memory cards, ROMs, and the like.

Methods according to various examples disclosed herein may be provided in a computer program product. A computer program product may be distributed in the form of a machine-readable storage medium (*e.g.,* compact disc read only memory (CD-ROM)) or online via an application store (*e.g.,* PlayStore^{™}). In the case of online distribution, at least a portion of the computer program product may be stored, or at least temporarily generated, on a storage medium, such as a manufacturer's server, an application store's server, or the memory of a relay server.

Although the examples above have been described by embodiments and drawings, those skilled in the art could understand that various modifications and variations may be made from the disclosures above. For example, suitable results may be achieved even if the described techniques are performed in a different order from the methods described, and/or the components of the described systems, structures, devices, circuits, and the like, are combined or joined in a form that is different from the methods described, or are substituted or replaced by other components or equivalents.

Accordingly, the scope of the present disclosure should not be limited to the described examples but should be defined by the following claims as well as those equivalents of these claims.

## Claims

1. A method for modeling carbon emission reductions through second-hand trading, the method performed by one or more modules implemented by a processor of a server device, the method comprising:
obtaining information about a category and an age of a particular product;
obtaining information about an average period of use of the category to which the product belongs, wherein the information about the average period of use is obtained from at least one of a manufacturer database and the server device;
determining a remaining period of use based on a difference between the average period of use and the age of the product when a second-hand trading of the product is concluded; and
calculating, based on the remaining period of use for the product, carbon emission reductions when the second-hand trading of the product is concluded.

2. A method for modeling carbon emission reductions through second-hand trading, the method performed by one or more modules implemented by a processor of a server device, the method comprising:
obtaining information about a category of a particular product that is subject to second-hand trading;
obtaining a first carbon emission of an average manufacturing process of one or more products in a category to which the product belongs and a second carbon emission of an average disposal process of one or more products in the category, wherein the first carbon emission and the second carbon emission are obtained from at least one of a manufacturer database and the server device; and
calculating, based on the first carbon emission and the second carbon emission, carbon emission reductions when a second-hand trading of the product is concluded.

3. The method for modeling carbon emission reductions according to claim 1, wherein the method further comprises:
obtaining a first carbon emission of an average manufacturing process of the category to which the product belongs and a second carbon emission of an average disposal process of the category to which the product belongs, and
wherein a calculation of the carbon emission reductions when the second-hand trading of the product is concluded is based on the remaining period of use of the product, the first carbon emission and the second carbon emission.

4. The method for modeling carbon emission reductions according to claim 1 or 2, wherein the method further comprises:
displaying, on a user interface of an e-commerce platform, environmental points to be provided at least one of a buyer and a seller of the product when the second-hand trading of the product is concluded, the environmental points being calculated based on the carbon emission reductions when the second-hand trading of the product is concluded.

5. The method for modeling carbon emission reductions according to claim 4, wherein the method further comprises:
paying the environmental points to at least one of the buyer and the seller of the product when the second-hand trading of the product is concluded through the e-commerce platform, and
exchanging, in response to receiving a selection of a user intending to buy carbon credits through a user interface of the e-commerce platform, the paid environmental points to carbon credits.

6. The method for modeling carbon emission reductions according to claim 1, wherein the method further comprises:
determining an excess period of use based on a difference between the age of the product and the average period of use of the product if the age of the product is older than the average period of use, when the second-hand trading of the product is concluded, and
wherein calculating the carbon emission reductions is further based on the excess period of use of the product.

7. The method for modeling carbon emission reductions according to claim 6, wherein the remaining period of use and the excess period of use are calculated, based further on a weight given to a brand of the product if a brand manufacturer's certification exists for the brand of the product.

8. The method for modeling carbon emission reductions according to claim 6, wherein the remaining period of use and the excess period of use are calculated based further on a past second-hand trading history of the category to which the product belongs, achieved through an e-commerce platform.

9. A service device for modeling carbon emission reductions through second-hand trading comprising a memory including instructions and a processor, wherein the instructions are executed by the processor, to implement:
an acquisition module for acquiring information about a category and age of a particular product and information about an average period of use of the category to which the product belongs, wherein the information about the average period of use is acquired from at least one of a manufacturer database and the server device,
a first computation module for determining a remaining period of use based on a difference between the average period of use and the age of the product when a second-hand trading of the product is concluded, and
a second computation module for calculating, based on the remaining period of use of the product, carbon emission reductions when the second-hand trading of the product is concluded.

10. A computer-readable recording medium storing instructions, wherein the instructions cause a processor of a server device for performing a method for modeling carbon emission reductions through second-hand trading, when executed by the processor, to perform:
acquiring information about a category and an age of a particular product,
obtaining information about an average period of use of a category to which the product belongs, wherein the information about the average period of use is obtained from at least one of a manufacturer database and the server device,
determining a remaining period of use based on a difference between the average period of use and the age of the product when a second-hand trading of the product is concluded, and
calculating, based on the remaining period of the product, carbon emission reductions when the second-hand trading of the product is concluded.
